# EUROPÄISCHE PATENTANMELDUNG

(11) **EP 4 518 061 A1**
(43) Veröffentlichungstag der Anmeldung: **05.03.2025**
(21) Anmeldenummer: 24198171.1
(22) Anmeldetag: 03.09.2024
(51) Int. Cl.: H02G 3/04, B60L 53/18, B60L 53/31, H02G 1/00, H02G 15/04, H02B 1/50, H02G 3/22, E04H 12/22

(54) **VERFAHREN ZUR MONTAGE EINER SCHNELLLADESTATION FÜR ELEKTROFAHRZEUGE**

(30) Priorität: 04.09.2023 DE 102023123760
(71) Anmelder: Compleo Charging Solutions GmbH & Co. KG, 58513 Lüdenscheid (DE)
(72) Erfinder: DILGERT, Simon, 57072 Siegen (DE); MASS, Igor, 41462 Neuss (DE); KACHOUH, Checrallah, 44227 Dortmund (DE)
(74) Vertreter: Gottschald Patentanwälte Partnerschaft mbB

(57) **Zusammenfassung**

Die Erfindung betrifft ein Verfahren zur Montage einer Schnellladestation (1) für Elektrofahrzeuge, wobei ein Fundament (2) vorgesehen ist, wobei in dem Fundament (2) Kabel (3) zur Versorgung der Schnellladestation (1) mit elektrischer Energie verlegt sind, wobei Kabelenden (4) der elektrischen Kabel (3) aus dem Fundament (2) ragen, wobei die Schnellladestation (1) auf das Fundament (2) aufgesetzt wird, wobei die Schnellladestation (1) eine Bodenöffnung (6) aufweist, wobei die Kabelenden (4) nach dem Aufsetzen der Schnellladestation (1) durch die Bodenöffnung (6) geführt sind und in der Schnellladestation (1) an eine Eingangsverteilung (7) angeschlossen werden. Es wird vorgeschlagen, dass vor dem Aufsetzen der Schnellladestation (1) auf das Fundament (2) ein Kabelschutz (9) mit dem Fundament (2) verbunden wird, dass der Kabelschutz (9) die Kabelenden (4) von mindestens zwei, vorzugsweise mindestens drei, weiter vorzugsweise allen vier, vertikalen Seiten umgibt, und, dass beim Aufsetzen der Schnellladestation (1) auf das Fundament (2) der Kabelschutz (9) in die Bodenöffnung (6) eingeführt wird.

## Beschreibung

Die vorliegende Erfindung betrifft ein Verfahren zur Montage einer Schnellladestation für Elektrofahrzeuge gemäß dem Oberbegriff von Anspruch 1, eine Schnellladestationsanordnung mit einer Schnellladestation und einem Kabelschutz gemäß Anspruch 10, eine Schnellladestation gemäß Anspruch 11 sowie einen Sockeladapter gemäß Anspruch 12.

Schnellladestationen, auch bekannt als high performance charger, sind Gleichstromladestationen für elektrische Fahrzeuge, insbesondere Automobile, aber auch Lastkraftfahrzeuge, Schiffe und dergleichen. Schnellladestation sind so schwer, dass diese mit einem Hebewerkzeug, beispielsweise einem Kran oder einem Gabelstapler montiert werden müssen.

Üblicherweise wird eine Schnellladestation auf einem Fundament platziert. In dem Fundament befinden sich Kabel, mittels derer die Schnellladestation mit elektrischer Energie versorgt wird. Diese Kabel ragen aus dem Fundament, werden durch den Boden der Schnellladestation eingeführt und innerhalb der Schnellladestation angeschlossen. Da die Schnellladestationen große Leistungen, üblicherweise ab 50 kW aufwärts, zur Verfügung stellen und entsprechend auch abrufen, haben die Kabel auch einen entsprechenden Querschnitt. Es ist daher eine Herausforderung, diese Kabel beim Platzieren der Schnellladestation treffsicher durch eine Öffnung im Boden der Schnellladestation zu führen, ohne dabei die Kabel oder die Schnellladestation zu beschädigen.

Bei einer bekannten Schnellladestation (Siemens Sicharge D) werden die Kabel nach dem Aufsetzen der Schnellladestation abgelängt und final positioniert. Es sind somit viele Arbeiten auszuführen, wenn die Schnellladestation bereits aufgesetzt ist und somit wenig Platz vorhanden ist.

Bei einer anderen bekannten Schnellladestation (Alpitronic Hypercharger) steht ein Hilfsmittel (Cable Jig) zur Verfügung, mit dem die Kabel bereits final positioniert und abgelängt werden können, bevor die Schnellladestation aufgesetzt wird. Problematisch ist dabei, dass das Cable Jig nur ein temporäres Hilfsmittel ist, das vor dem Aufsetzen der Schnellladestation wieder entfernt wird. Die abgelängten Kabelenden stehen somit in der finalen Position, können jedoch beim Aufsetzen der Schnellladestation getroffen und verbogen werden oder die Schnellladestation beschädigen. Auch benötigt das Anbringen und anschließende wieder Lösen der Kabelenden an das Cable Jig relativ viele Arbeitsschritte.

Der Erfindung liegt das Problem zugrunde, die bekannten Verfahren zur Montage einer Schnellladestation derart auszugestalten und weiterzubilden, dass hinsichtlich der genannten Herausforderungen eine weitere Optimierung erreicht wird, insbesondere derart, dass der Montageprozess vereinfacht und Fehler-resistenter wird.

Das obige Problem wird durch die Merkmale des kennzeichnenden Teils von Anspruch 1 gelöst.

Wesentlich ist die grundsätzliche Überlegung, dass die abgelängten Kabelenden mittels eines Kabelschutzes geschützt werden können. Wird die Schnellladestation im ersten Anlauf nicht optimal positioniert, trifft diese nur auf den Kabelschutz und nicht auf die Kabelenden. Der Kabelschutz wird so ausgestaltet, dass weder die Schnellladestation noch die Kabelenden dadurch beschädigt werden.

Im Einzelnen wird vorgeschlagen, dass vor dem Aufsetzen der Schnellladestation auf das Fundament ein Kabelschutz mit dem Fundament verbunden wird, dass der Kabelschutz die Kabelenden von mindestens zwei, vorzugsweise mindestens drei, weiter vorzugsweise allen vier, vertikalen Seiten umgibt, und, dass beim Aufsetzen der Schnellladestation auf das Fundament der Kabelschutz in die Bodenöffnung eingeführt wird.

Der Begriff "vertikale Seiten" meint die orthogonalen, vertikal orientierten Seiten, von denen es genau vier gibt. Die Orientierung der Seiten ist dabei nicht relevant, vorzugsweise stimmen diese mit den meist auch genau vier Seiten der Schnellladestation überein. Jeweils zwei benachbarte Seiten sind orthogonal und zwei gegenüberliegende Seiten parallel orientiert. Beispielhaft verlaufen die Seiten alle orthogonal zu einer Himmelsrichtung. Der Kabelschutz schützt somit aus mindestens einer Blickrichtung mindestens teilweise aus zwei der Richtungen "links", "rechts", "vorne" und "hinten".

Bei einer bevorzugten Ausgestaltung gemäß Anspruch 2 ist vorgesehen, dass die Schnellladestation eine Einführhilfe aufweist, die das Aufsetzen der Schnellladestation auf das Fundament und das Einführen des Kabelschutzes in die Bodenöffnung unterstützt. Dafür weist die Einführhilfe mindestens eine Einführphase auf. Es ist dann zu unterscheiden, wie die Montage erfolgt. Bei einer Montage per Gabelstapler hat die Schnellladestation nur wenige Möglichkeiten, bei einem Kontakt zwischen der Einführphase und dem Kabelschutz auszuweichen, sodass die Unterstützung im Wesentlichen darin besteht, dass ein weiteres Absenken der Schnellladestation blockiert wird. Bei einer freischwingenden Montage per Kran hingegen kann die Schnellladestation durch die Einführphase deutlich geführt werden und zentriert sich somit selbst.

Gemäß Anspruch 3 ist der Kabelschutz teil eines Sockeladapters und insbesondere indirekt über eine Bodenplatte mit dem Fundament verbunden. Der Sockeladapter kann gemäß Anspruch 4 ebenfalls eine Einführhilfe aufweisen. Diese dient vorzugsweise der Feinpositionierung, nachdem mittels der Einführhilfe der Schnellladestation bereits eine Grobpositionierung erfolgt ist. Die Schnellladestation kann so insgesamt einfach präzise positioniert werden, ohne, dass bei kleineren Ungenauigkeiten Beschädigungen zu befürchten sind oder die Kabelenden nach einem Verbiegen erneut ausgerichtet werden müssen oder deren Isolation beschädigt wird.

Anspruch 5 betrifft eine weitere bevorzugte Ausgestaltung des Kabelschutzes, wonach dieser ein Grundmodul und ein Deckelmodul aufweist. Das Deckelmodul schützt die Kabelenden dabei auch von oben. Weitergebildet wird diese Ausgestaltung gemäß Anspruch 6 durch eine Montagehilfe, die bevorzugt einfach auf das Grundmodul gesteckt wird und anzeigt, welche Länge die Kabelenden aufweisen sollen und wo diese anzuordnen sind. Gemäß Anspruch 7 kann außerdem vorgesehen sein, dass über den Sockeladapter, insbesondere das Grundmodul, Zugentlastungen für die Kabelenden befestigt werden. So kann ein weiterer Arbeitsschritt mit ausreichend Platz durchgeführt werden, bevor die Schnellladestation aufgesetzt wird.

Bei einer Ausgestaltung gemäß Anspruch 8 wird das Deckelmodul nur temporär verwendet, dessen Befestigung jedoch für einen Berührschutz innerhalb der Schnellladestation wiederverwendet.

Anspruch 9 betrifft eine bevorzugte Ausgestaltung für die Montage mittels eines Gabelstaplers und konstruktive Ausgestaltungen dafür. Vorgesehene Gabelstapleröffnungen können so ausgestaltet werden, dass die Schnellladestation etwas schwimmend auf den Zinken aufliegt und somit zumindest teilweise mittels der Einführhilfen ausrichtbar ist.

Nach einer weiteren Lehre gemäß Anspruch 10, der eigenständige Bedeutung zukommt, wird eine Schnellladestationsanordnung mit einer Schnellladestation und einem Kabelschutz zur Verwendung in dem vorschlagsgemäßen Verfahren beansprucht.

Auf alle Ausführungen zu dem vorschlagsgemäßen Verfahren darf verwiesen werden.

Nach einer weiteren Lehre gemäß Anspruch 11, der ebenfalls eigenständige Bedeutung zukommt, wird eine Schnellladestation zur Verwendung in dem vorschlagsgemäßen Verfahren beansprucht.

Auf alle Ausführungen zu dem vorschlagsgemäßen Verfahren und der vorschlagsgemäßen Schnellladestationsanordnung darf verwiesen werden.

Nach einer weiteren Lehre gemäß Anspruch 12, der ebenfalls eigenständige Bedeutung zukommt, wird ein Sockeladapter zur Verwendung in dem vorschlagsgemäßen Verfahren beansprucht.

Auf alle Ausführungen zu dem vorschlagsgemäßen Verfahren, der vorschlagsgemäßen Schnellladestationsanordnung und der vorschlagsgemäßen Schnellladestation darf verwiesen werden.

Im Folgenden wird die Erfindung anhand einer lediglich Ausführungsbeispiele darstellenden Zeichnung näher erläutert. In der Zeichnung zeigt
- Fig. 1: eine fertig montierte Schnellladestation,
- Fig. 2: das Aufsetzen der Schnellladestation auf ein Fundament schematisch ohne Hebewerkzeug,
- Fig. 3: das Aufsetzen der Schnellladestation mittels eines Gabelstaplers,
- Fig. 4: den Boden der Schnellladestation in a) von oben und b) von unten, jeweils ohne den Rest der Schnellladestation und mit (frei schwebender) Eingangsverteilung und
- Fig. 5: einen Sockeladapter für das Fundament mit einem Kabelschutz.

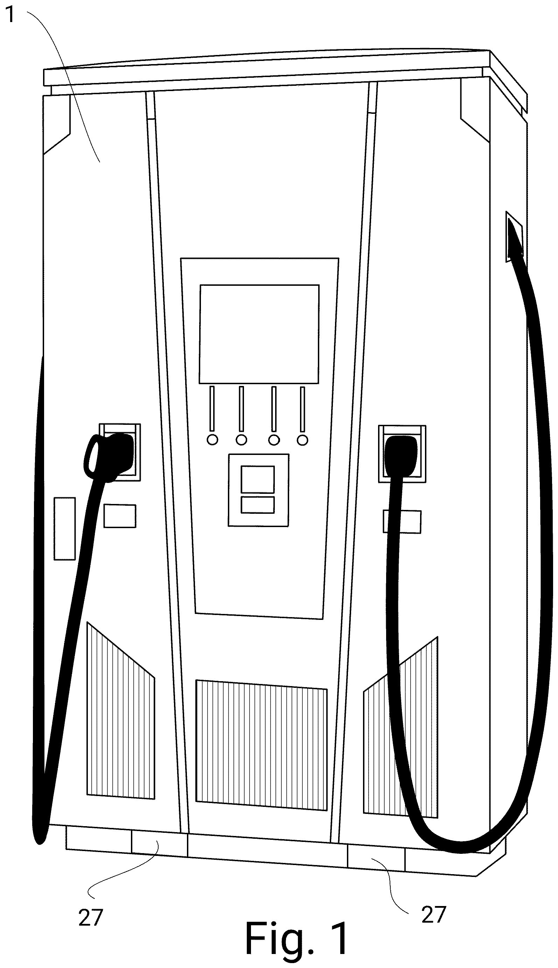

Fig. 1 zeigt eine Außenansicht einer vorschlagsgemäßen Schnellladestation 1 für Elektrofahrzeuge. Diese weist mindestens einen Anschlusspunkt für ein Elektrofahrzeug, hier ein fest angeschlagenes Ladekabel, auf. Vorzugsweise weist die Schnellladestation 1 mindestens, hier genau, zwei Anschlusspunkte auf. Eine Schnellladestation 1 dient zum Laden eines Elektrofahrzeugs mittels Gleichstroms und einer Leistung von zumeist mindestens 50 kW. Üblicherweise ist die Schnellladestation 1 dafür an ein Wechselstromnetz angeschlossen.

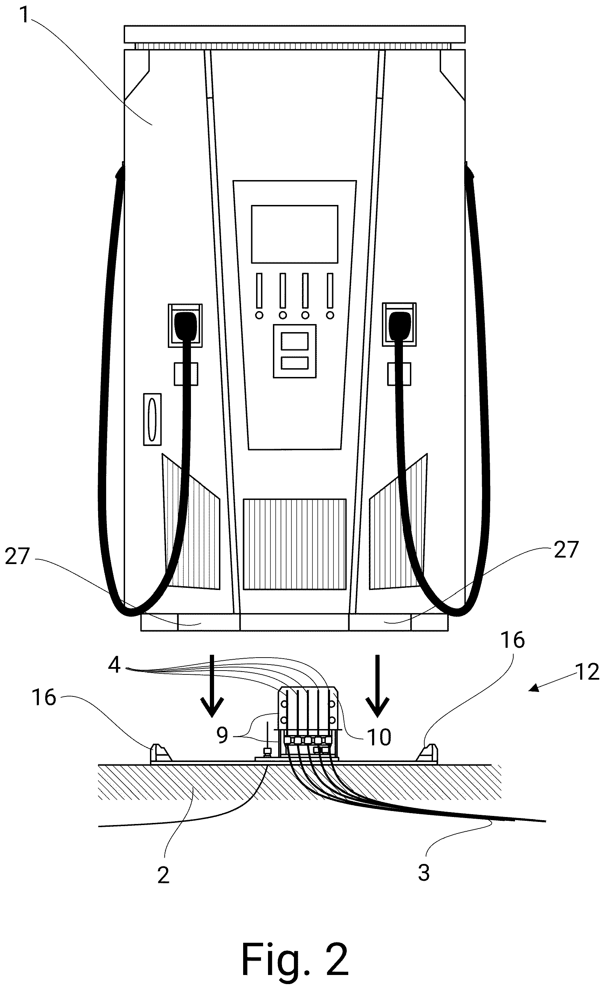

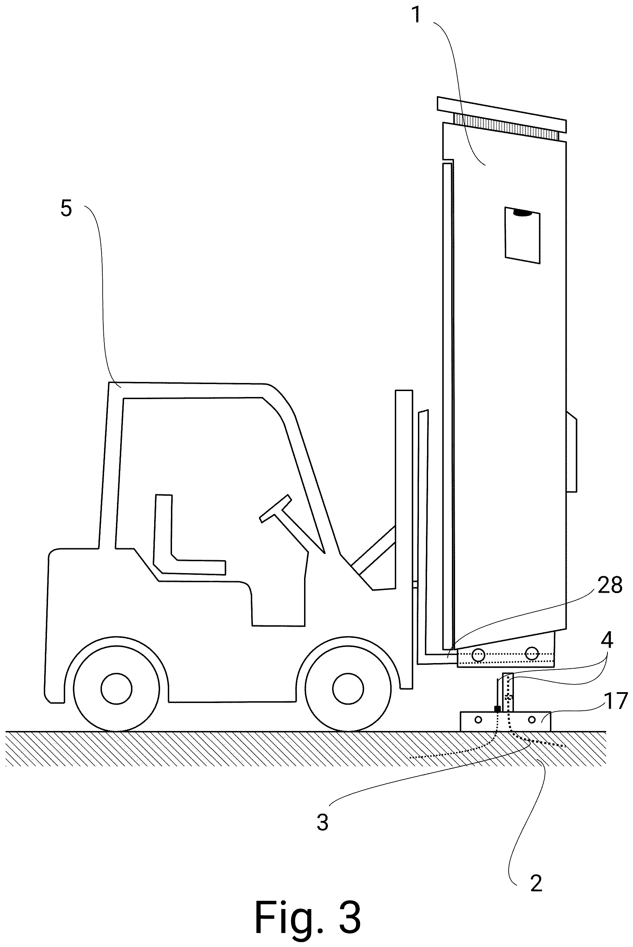

Das in den Figuren dargestellte und insoweit bevorzugte Ausführungsbeispiel betrifft ein Verfahren zur Montage einer Schnellladestation 1 für Elektrofahrzeuge. Dafür ist ein Fundament 2 vorgesehen. In dem Fundament 2 sind Kabel 3 zur Versorgung der Schnellladestation 1 mit elektrischer Energie verlegt. Kabelenden 4 der elektrischen Kabel 3 ragen aus dem Fundament 2. Fig. 2 zeigt schematisch, dass die Schnellladestation 1 auf das Fundament 2 aufgesetzt wird. Dies kann in Fig. 2 beispielsweise mittels eines nicht dargestellten Krans erfolgen oder wie in Fig. 3 dargestellt mittels eines Gabelstaplers 5.

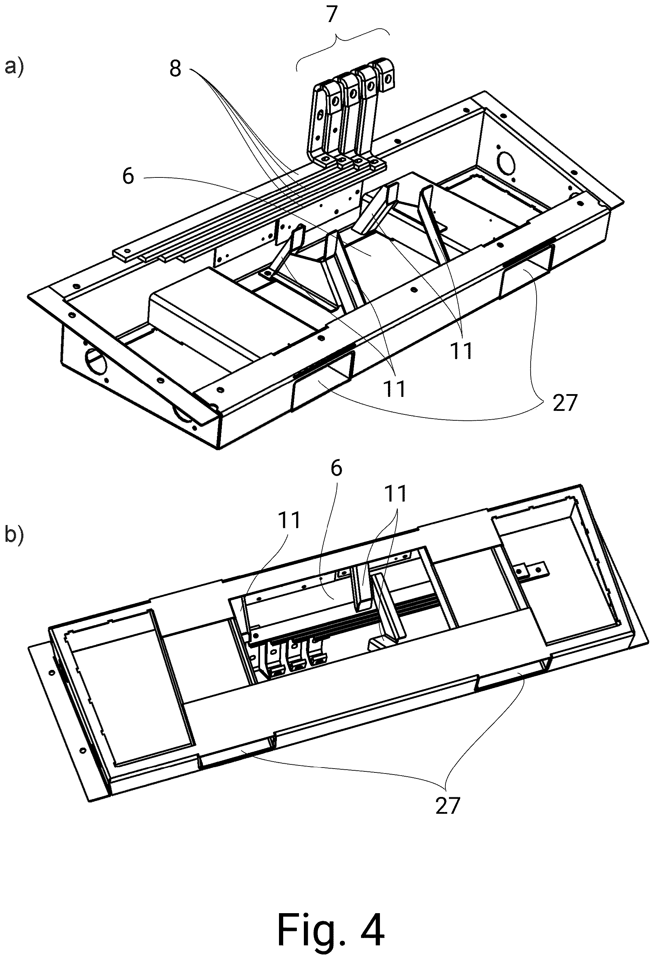

Die Schnellladestation 1 weist eine Bodenöffnung 6 auf, die in Fig. 4 aus zwei Perspektiven dargestellt ist. Fig. 4a) zeigt einen Blick von oben auf einen Fuß der Schnellladestation 1, wobei der Rest der Schnellladestation 1 nicht dargestellt ist. Fig. 4b) zeigt den Fuß der Schnellladestation 1 von unten. Insbesondere ist mittig die Bodenöffnung 6 erkennbar.

Nach dem Aufsetzen der Schnellladestation 1 sind die Kabel 3 durch die Bodenöffnung 6 geführt und werden in der Schnellladestation 1 an eine Eingangsverteilung 7 angeschlossen. Fig. 4 zeigt die Eingangsverteilung 7 bzw. die Eingangsschienen 8 der Eingangsverteilung 7, wobei die Komponenten der Schnellladestation 1 um die Eingangsschienen 8 herum ausgeblendet wurden.

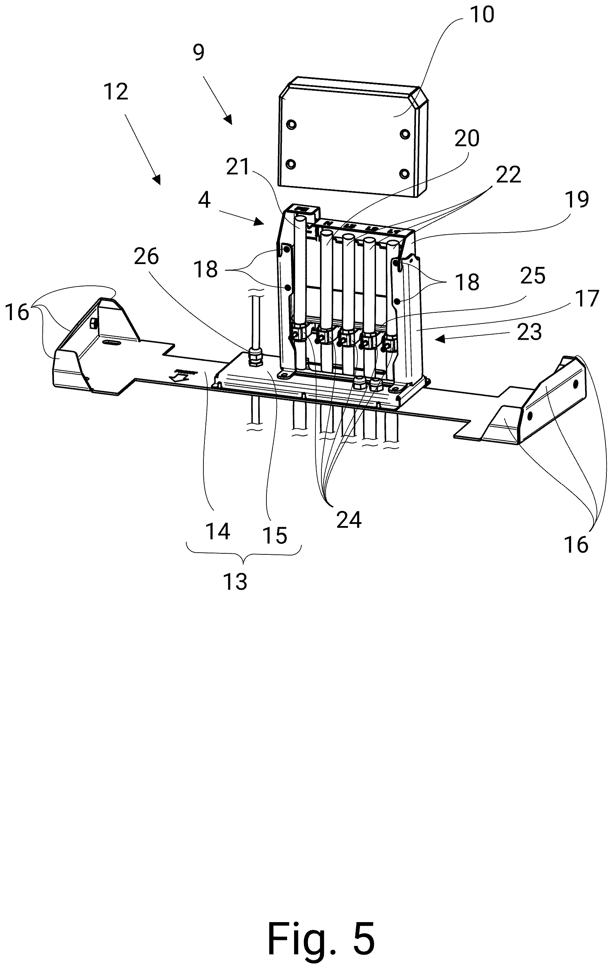

Wesentlich ist nun, dass vor dem Aufsetzen der Schnellladestation 1 auf das Fundament 2 ein Kabelschutz 9 mit dem Fundament 2 verbunden wird. Der Kabelschutz 9 ist teilweise in Fig. 5 dargestellt und in den Figuren 2 und 3 mit dem Fundament 2 verbunden.

Der Kabelschutz 9 umgibt die Kabelenden 4 von mindestens zwei, vorzugsweise mindestens drei, weiter vorzugsweise allen vier, vertikalen Seiten. Bezüglich der Definition von vertikalen Seiten wird auf den einleitenden Teil der Beschreibung verwiesen. In Fig. 5 ist der Kabelschutz 9 separat von einem noch zu erläuternden Deckelmodul 10 dargestellt, wodurch der montierte Teil des Kabelschutzes 9 die Kabelenden 4 im Wesentlichen von drei Seiten umgibt, nämlich von hinten, links und rechts. Von vorne ist ein geringer Schutz für die beiden äußeren Kabelenden 4 erkennbar.

Beim Aufsetzen der Schnellladestation 1 auf das Fundament 2 wird der Kabelschutz 9 in die Bodenöffnung 6 eingeführt. Dieser Vorgang ist in den Figuren 2 und 3 dargestellt.

Hier und vorzugsweise umgibt der Kabelschutz 9 die Kabelenden 4 seitlich für mindestens 50 % der Länge der abgelängten Kabelenden 4 ab dem Fundament 2 gemessen, vorzugsweise für mindestens 80 %, weiter vorzugsweise vollständig. Die Länge der Kabelenden 4 beträgt vorzugsweise mindestens 10 cm, weiter vorzugsweise mindestens 15 cm. Die Leiterquerschnitte betragen vorzugsweise für mindestens ein Kabel 3, insbesondere für drei Phasenkabel und ein Schutzleiterkabel, mindestens 100 mm².

Weiter ist hier und vorzugsweise vorgesehen, dass die Schnellladestation 1 im Bereich der Bodenöffnung 6 eine erste Einführhilfe 11 aufweist, die zumindest einseitig, vorzugsweise zweiseitig, eine Einführphase für die Positionierung der Schnellladestation 1 relativ zum Kabelschutz 9 bereitstellt. Die bevorzugte Ausgestaltung der ersten Einführhilfe 11 ist in Fig. 4 dargestellt. Diese weist zwei Einführphasen auf, die jeweils an zwei Seiten der Bodenöffnung 6 ausgebildet sind. Entsprechend sind in Fig. 4a) insgesamt vier schräge Bauteile der ersten Einführhilfe 11 gezeigt. Ist die Schnellladestation 1 beim Aufsetzen auf das Fundament 2 nicht genau über dem Kabelschutz 9 ausgerichtet, trifft dieser von innen auf eine der Einführphasen. Kann die Schnellladestation 1 ausweichen, wird sie automatisch entlang der Einführphase ausgerichtet, andernfalls muss manuell nachkorrigiert werden. So oder so werden jedoch weder die Kabelenden 4 verbogen noch Bauteile innerhalb der Schnellladestation 1 funktional beschädigt.

Hier und vorzugsweise ist die Schnellladestation 1 also mittels der ersten Einführhilfe 11 relativ zum Kabelschutz 9 ausrichtbar. Weiter vorzugsweise wird die Schnellladestation 1 mit einem Kran montiert und mittels der ersten Einführhilfe 11 ausgerichtet.

Vorzugsweise wird vor dem Aufsetzen der Schnellladestation 1 auf das Fundament 2 ein Sockeladapter 12 mit dem Fundament 2 verbunden. Fig. 5 zeigt den Sockeladapter 12 großteils. Der Sockeladapter 12 weist den Kabelschutz 9 auf. Vorzugsweise wird eine Bodenplatte 13 des Sockeladapters 12, insbesondere unmittelbar, mit dem Fundament 2 verbunden, insbesondere verschraubt. Die Bodenplatte 13 ist in Fig. 5 gezeigt und in Fig. 2 erkennbar auf dem Fundament 2 angeordnet.

Der Kabelschutz 9 wird, insbesondere unmittelbar, mit der Bodenplatte 13 verbunden, insbesondere verschraubt. Die Bodenplatte 13 ist hier und vorzugsweise zweiteilig ausgestaltet. Es wird also eine untere Platte 14 der Bodenplatte 13 unmittelbar mit dem Fundament 2 verbunden, eine obere Platte 15 der Bodenplatte 13 unmittelbar mit der unteren Platte 14 verbunden und der Kabelschutz 9 unmittelbar mit der oberen Platte 15 verbunden.

Ebenfalls in Fig. 5 ist erkennbar, dass hier und vorzugsweise, der Sockeladapter 12, insbesondere die Bodenplatte 13, eine zweite Einführhilfe 16 aufweist, die zumindest einseitig, insbesondere vierseitig, eine Einführphase für die Positionierung der Schnellladestation 1 relativ zum Sockeladapter 12 bereitstellt.

Vorzugsweise ist die Schnellladestation 1 mittels der zweiten Einführhilfe 16 relativ zum Sockeladapter 12 ausrichtbar. Bevorzugt ist es dabei so, dass die Schnellladestation 1 erst mittels der ersten Einführhilfe 11 und anschließend mittels der zweiten Einführhilfe 16 ausrichtbar ist. Die erste Einführhilfe 11 kann also einer Grobpositionierung dienen und die zweite Einführhilfe 16 einer Feinpositionierung.

Hier und vorzugsweise ist es so, dass der Kabelschutz 9 mehrteilig, insbesondere mindestens oder genau zweiteilig, ausgestaltet ist. Der Kabelschutz 9 weist demnach ein Grundmodul 17 auf, das mit dem Fundament 2, insbesondere unmittelbar mit der Bodenplatte 13, hier der oberen Platte 15, und somit mittelbar mit dem Fundament 2, verbunden wird. Weiter weist der Kabelschutz 9 ein Deckelmodul 10 auf, das auf das Grundmodul 17 aufgesetzt wird. Das Deckelmodul 10 ist in Fig. 5 nicht montiert gezeigt, da in Fig. 5 ein Blick in den Sockeladapter 12 möglich ist. Das Deckelmodul 10 ist in Fig. 2 montiert dargestellt. Es wird auf das Grundmodul 17 aufgesteckt und vorzugsweise mit diesem verschraubt. In Fig. 5 sind die entsprechenden Schraubenöffnungen 18 des Grundmoduls 17 erkennbar.

Vorzugsweise ist es dabei so, dass das Grundmodul 17 die Kabelenden 4 von mindestens zwei, vorzugsweise mindestens drei, vertikalen Seiten umgibt, und/oder, dass das Deckelmodul 10 die Kabelenden 4 von mindestens einer vertikalen Seite und/oder von oben umgibt. So sind die Kabelenden 4 vor dem Aufsetzen des Deckelmoduls 10 gut für weitere Montageschritte zugänglich.

Ebenfalls in Fig. 5 gezeigt ist, dass hier und vorzugsweise eine Montagehilfe 19 an dem Grundmodul 17 angebracht wird, insbesondere auf das Grundmodul 17 aufgesteckt wird. Die Montagehilfe 19 zeigt korrekte Längen und Positionen der Kabelenden 4, insbesondere eines Nullleiters 20, eines Schutzleiters 21 und dreier Phasenleiter 22, an. Die Montagehilfe 19 begrenzt den Platz für die Kabelenden 4 nach oben hin, sodass deren finale Länge gut ersichtlich ist. Sie weist zusätzlich oder alternativ etwa halbkreisförmige Aufnahmen für die Kabelenden 4 auf, über die die finale Positionierung der Kabelenden 4 bereits vor dem Aufsetzen der Schnellladestation 1 möglich ist.

Vorzugsweise wird die Montagehilfe 19 nur aufgesteckt und nicht befestigt, wodurch sie schnell und einfach aufgesetzt und wieder entfernt werden kann. Zusätzlich oder alternativ wird die Montagehilfe 19 vor dem Aufsetzen der Schnellladestation 1, insbesondere vor dem Aufsetzen des Deckelmoduls 10, entfernt.

Weiter ist hier und vorzugsweise vorgesehen, dass der Sockeladapter 12, insbesondere das Grundmodul 17, eine Befestigungsanordnung 23 für Zugentlastungen 24 aufweist und dass Zugentlastungen 24 mit den Kabelenden 4 und der Befestigungsanordnung 23 verbunden werden, bevor die Schnellladestation 1 aufgesetzt wird. Vorzugsweise weist die Befestigungsanordnung 23 eine horizontale Befestigungsschiene 25 aufweist, die unmittelbar an dem Grundmodul 17 befestigt ist. Es ist unabhängig von der konkreten Ausgestaltung hier und vorzugsweise möglich, die Zugentlastung 24 der Kabelenden 4 sicherzustellen, bevor die Schnellladestation 1 aufgesetzt wird.

Wie in Fig. 5 dargestellt dient der Sockeladapter 12, hier und vorzugsweise die Bodenplatte 13, insbesondere die obere Platte 15, auch dem Anschluss eines Netzwerkkabels, für das hier und vorzugsweise am Sockeladapter 12 eine Netzwerkkabelhalterung 26 vorgesehen ist. Das Netzwerkkabel wird demnach ebenfalls durch die Bodenöffnung 6 in die Schnellladestation 1 eingeführt.

Es kann vorgesehen sein, dass das Deckelmodul 10 nach dem Aufsetzen der Schnellladestation 1 entfernt wird. Vorzugsweise werden nach dem Entfernen des Deckelmoduls 10 die Kabelenden 4 mit der Eingangsverteilung 7 verbunden. Schon vor dem Aufsetzen der Schnellladestation 1, denkbar jedoch auch erst danach, werden Kabelschuhe auf die Kabelenden 4 aufgesetzt. In Fig. 4 sind die Enden der Eingangsschienen 8 erkennbar, an die die Kabelschuhe angeschraubt werden können. Somit ist nach dem Aufsetzen der Schnellladestation 1 vorteilhafterweise nur das Anschrauben der bereits korrekt positionierten Kabelschuhe zur Verbindung zwischen den Kabelenden 4 und der Eingangsverteilung 7 notwendig. Da die Montagehilfe 19 hier und vorzugsweise Beschriftungen für einzelnen Kabelenden 4 aufweist, ist auch eine falsche Verbindung ausgeschlossen.

Nach dem Verbinden der Kabelenden 4 mit der Eingangsverteilung 7 kann ein Berührschutz an dem Grundmodul 17 befestigt werden. Vorzugsweise werden der Berührschutz und das Deckelmodul 10 über dieselbe Befestigung, insbesondere dieselben Befestigungsöffnungen, hier die Schraubenöffnungen 18, mit dem Grundmodul 17 verbunden.

Eine weitere bevorzugte Ausgestaltung sieht vor, dass die Schnellladestation 1 Öffnungen, insbesondere Tunnel 27, für Zinken 28 eines Gabelstaplers 5 aufweist. Die Öffnungen können so ausgestaltet sein, dass die Schnellladestation 1 schwimmend gelagert ist und, in gewissem Maße, durch die Einführhilfen geführt werden kann.

Vorzugsweise weist der Sockeladapter 12 zwischen dem Kabelschutz 9 und der zweiten Einführhilfe 16 einen Freiraum für die Zinken 28 des Gabelstaplers 5 auf.

Vorgeschlagen wird gemäß einer weiteren Lehre eine Schnellladestationsanordnung mit einer Schnellladestation 1 und einem Kabelschutz 9 zur Verwendung in dem vorschlagsgemäßen Verfahren.

Auf alle Ausführungen zu dem vorschlagsgemäßen Verfahren darf verwiesen werden. Vorzugsweise weist die Schnellladestationsanordnung den Sockeladapter 12 auf.

Vorgeschlagen wird gemäß einer weiteren Lehre eine Schnellladestation 1 zur Verwendung in dem vorschlagsgemäßen Verfahren.

Auf alle Ausführungen zu dem vorschlagsgemäßen Verfahren und der vorschlagsgemäßen Schnellladestationsanordnung darf verwiesen werden.

Vorgeschlagen wird gemäß einer weiteren Lehre ein Sockeladapter 12 zur Verwendung in dem vorschlagsgemäßen Verfahren.

Auf alle Ausführungen zu dem vorschlagsgemäßen Verfahren, der vorschlagsgemäßen Schnellladestationsanordnung und der vorschlagsgemäßen Schnellladestation 1 darf verwiesen werden.

## Patentansprüche

1. Verfahren zur Montage einer Schnellladestation (1) für Elektrofahrzeuge, wobei ein Fundament (2) vorgesehen ist, wobei in dem Fundament (2) Kabel (3) zur Versorgung der Schnellladestation (1) mit elektrischer Energie verlegt sind, wobei Kabelenden (4) der elektrischen Kabel (3) aus dem Fundament (2) ragen, wobei die Schnellladestation (1) auf das Fundament (2) aufgesetzt wird, wobei die Schnellladestation (1) eine Bodenöffnung (6) aufweist, wobei die Kabelenden (4) nach dem Aufsetzen der Schnellladestation (1) durch die Bodenöffnung (6) geführt sind und in der Schnellladestation (1) an eine Eingangsverteilung (7) angeschlossen werden
**dadurch gekennzeichnet,**
**dass** vor dem Aufsetzen der Schnellladestation (1) auf das Fundament (2) ein Kabelschutz (9) mit dem Fundament (2) verbunden wird, dass der Kabelschutz (9) die Kabelenden (4) von mindestens zwei, vorzugsweise mindestens drei, weiter vorzugsweise allen vier, vertikalen Seiten umgibt, und, dass beim Aufsetzen der Schnellladestation (1) auf das Fundament (2) der Kabelschutz (9) in die Bodenöffnung (6) eingeführt wird.

2. Verfahren nach Anspruch 1, **dadurch gekennzeichnet, dass** die Schnellladestation (1) im Bereich der Bodenöffnung (6) eine erste Einführhilfe (11) aufweist, die zumindest einseitig, vorzugsweise zweiseitig, eine Einführphase für die Positionierung der Schnellladestation (1) relativ zum Kabelschutz (9) bereitstellt, vorzugsweise, dass die Schnellladestation (1) mittels der ersten Einführhilfe (11) relativ zum Kabelschutz (9) ausrichtbar ist, weiter vorzugsweise, dass die Schnellladestation (1) mit einem Kran montiert und mittels der ersten Einführhilfe (11) ausgerichtet wird.

3. Verfahren nach Anspruch 1 oder 2, **dadurch gekennzeichnet, dass** vor dem Aufsetzen der Schnellladestation (1) auf das Fundament (2) ein Sockeladapter (12) mit dem Fundament (2) verbunden wird, dass der Sockeladapter (12) den Kabelschutz (9) aufweist, vorzugsweise, dass eine Bodenplatte (13) des Sockeladapters (12), insbesondere unmittelbar, mit dem Fundament (2) verbunden, insbesondere verschraubt, wird, dass der Kabelschutz (9), insbesondere unmittelbar, mit der Bodenplatte (13) verbunden, insbesondere verschraubt, wird.

4. Verfahren nach Anspruch 3, **dadurch gekennzeichnet, dass** der Sockeladapter (12), insbesondere die Bodenplatte (13), eine zweite Einführhilfe (16) aufweist, die zumindest einseitig, insbesondere vierseitig, eine Einführphase für die Positionierung der Schnellladestation (1) relativ zum Sockeladapter (12) bereitstellt, vorzugsweise, dass die Schnellladestation (1) mittels der zweiten Einführhilfe (16) relativ zum Sockeladapter (12) ausrichtbar ist, weiter vorzugsweise, dass die Schnellladestation (1) erst mittels der ersten Einführhilfe (11) und anschließend mittels der zweiten Einführhilfe (16) ausrichtbar ist.

5. Verfahren nach einem der vorhergehenden Ansprüche, **dadurch gekennzeichnet, dass** der Kabelschutz (9) mehrteilig, insbesondere zweiteilig, ausgestaltet ist, dass der Kabelschutz (9) ein Grundmodul (17) aufweist, das mit dem Fundament (2), insbesondere unmittelbar mit der Bodenplatte (13) und somit mittelbar mit dem Fundament (2), verbunden wird, dass der Kabelschutz (9) ein Deckelmodul (10) aufweist, das auf das Grundmodul (17) aufgesetzt wird, vorzugsweise, dass das Grundmodul (17) die Kabelenden (4) von mindestens zwei, vorzugsweise mindestens drei, vertikalen Seiten umgibt, und/oder, dass das Deckelmodul (10) die Kabelenden (4) von mindestens einer vertikalen Seite und/oder von oben umgibt.

6. Verfahren nach Anspruch 5, **dadurch gekennzeichnet, dass** eine Montagehilfe (19) an dem Grundmodul (17) angebracht wird, insbesondere auf das Grundmodul (17) aufgesteckt wird, dass die Montagehilfe (19) korrekte Längen und Positionen der Kabelenden (4), insbesondere eines Nullleiters (20), eines Schutzleiters (21) und dreier Phasenleiter (22), anzeigt, vorzugsweise, dass die Montagehilfe (19) nur aufgesteckt und nicht befestigt wird, und/oder, dass die Montagehilfe (19) vor dem Aufsetzen der Schnellladestation (1), insbesondere vor dem Aufsetzen des Deckelmoduls (10), entfernt wird.

7. Verfahren nach einem der Ansprüche 3 bis 6, **dadurch gekennzeichnet, dass** der Sockeladapter (12), insbesondere das Grundmodul (17), eine Befestigungsanordnung (23) für Zugentlastungen (24) aufweist, dass Zugentlastungen (24) mit den Kabelenden (4) und der Befestigungsanordnung (23) verbunden werden, bevor die Schnellladestation (1) aufgesetzt wird, vorzugsweise, dass die Befestigungsanordnung (23) eine horizontale Befestigungsschiene (25) aufweist, die unmittelbar an dem Grundmodul (17) befestigt ist.

8. Verfahren nach einem der Ansprüche 5 bis 7, **dadurch gekennzeichnet, dass** das Deckelmodul (10) nach dem Aufsetzen der Schnellladestation (1) entfernt wird, vorzugsweise, dass nach dem Entfernen des Deckelmoduls (10) die Kabelenden (4) mit der Eingangsverteilung (7) verbunden werden, weiter vorzugsweise, dass nach dem Verbinden der Kabelenden (4) mit der Eingangsverteilung (7) Berührschutz an dem Grundmodul (17) befestigt wird, noch weiter vorzugsweise, dass der Berührschutz und das Deckelmodul (10) über dieselbe Befestigung, insbesondere dieselben Befestigungsöffnungen, mit dem Grundmodul (17) verbunden werden.

9. Verfahren nach einem der vorhergehenden Ansprüche, **dadurch gekennzeichnet, dass** die Schnellladestation (1) Öffnungen, insbesondere Tunnel (27), für Zinken (28) eines Gabelstaplers (5) aufweist, vorzugsweise, dass der Sockeladapter (12) zwischen dem Kabelschutz (9) und der zweiten Einführhilfe (16) einen Freiraum für die Zinken (28) des Gabelstaplers (5) aufweist.

10. Schnellladestationsanordnung mit einer Schnellladestation (1) und einem Kabelschutz (9) zur Verwendung in einem Verfahren nach einem der vorhergehenden Ansprüche.

11. Schnellladestation zur Verwendung in einem Verfahren nach einem der Ansprüche 2 bis 9.

12. Sockeladapter zur Verwendung in einem Verfahren nach einem der Ansprüche 3 bis 9.
